# EUROPEAN PATENT APPLICATION

(11) **EP 2 556 908 A1**
(43) Date of publication of application: **13.02.2013**
(21) Application number: 11766004.3
(22) Date of filing: 08.04.2011
(51) Int. Cl.: B22F 7/00, B23B 27/14, C04B 37/02, C04B 41/87, C22C 19/00, C22C 29/04, C22C 29/08, C22C 30/00

(54) **COMPOSITE BODY**

(30) Priority: 08.04.2010 JP 2010089373
(71) Applicant: Tungaloy Corporation, Iwaki-shi Fukushima 970-1144 (JP)
(72) Inventor: UMEMURA, Takashi, (JP)
(74) Representative: Vossius & Partner
(86) International application number: PCT/JP2011/058865
(87) International publication number: WO 2011/126104

(57) **Abstract**

An object is to provide a composite material wherein a cBN sintered body and hard metal are firmly bonded. The composite material comprises a cBN sintered body, hard metal, and a bonding layer presenting between the cBN sintered body and the hard metal, and the bonding layer being a metal with a thickness of 0.1 to 5µm.

## Description

### TECHNICAL FIELD

The present invention relates to a composite material which is formed by firmly bonding a cBN sintered body (cubic boron nitride sintered body) and a hard metal.

### BACKGROUND ART

A cBN sintered body is a material which is extremely hard and has high thermal conductivity, and by using the characteristics, it has been used for a cutting tool, etc. For producing the cBN sintered body, it is required to use a large sized ultra-high pressure and high temperature generating device, so that the cBN sintered body is extremely expensive. Therefore, a cBN tool in which a cBN sintered body had been brazed only to the portion which participates in cutting of a cemented carbide substrate has been used. However, bonding by brazing involved the problem in bonding strength, and particularly in the cutting which requires strength at a high temperature, there has been a problem that sufficient strength could not sufficiently be obtained.

As a method for bonding the cBN sintered body and the substrate without carrying out brazing, there is a cutting tool characterized in that a material is integrally sintered for bonding by subjecting the material in which a titanium foil is interposed between a base material of a cemented carbide or a tool steel and a cutting blade portion of a high hardness cemented carbide by the Spark plasma sintering method (for example, see Patent literature 1.). Also, there is a bonding method of a cubic boron nitride sintered body which comprises forming a Ti film with 0.01 to 1 µm at bonding surfaces of a pair of cubic boron nitride sintered bodies, then, forming a Cu film with 0.01 to 1 µm, sandwiching a ternary system alloy foil comprising Ag, Cu and In with a thickness of 10 to 1000 µm between the bonding surfaces of the above-mentioned cubic boron nitride sintered bodies, and heating the resulting material to a temperature from the melting point of the ternary system alloy comprising Ag, Cu and In or higher to 750° or less in vacuum or in an inert gas atmosphere (for example, see Patent literature 2.). However, these bonding methods involve the problem that an intermediate layer comprising a metal foil is thick so that there is a problem that a bonding strength between the cBN sintered body and the substrate is low.

### PRIOR ART LITERATURES

### PATENT LITERATURES

Patent literature 1 JP H08-168905A
Patent literature 2 JP 2557400B

### SUMMARY OF THE INVENTION

### PROBLEMS TO BE SOLVED BY THE INVENTION

The present invention has been accomplished to solve the above-mentioned problems, and an object thereof is to provide a composite material wherein a cBN sintered body and a hard metal are firmly bonded.

### MEANS TO SOLVE THE PROBLEMS

The present inventor has carried out researches on bonding of a cBN sintered body and a hard metal, and he has found out that the cBN sintered body and the hard metal are firmly bonded when a bonding layer comprising a metal with a thickness of 0.1 to 5 µm is formed between the cBN sintered body and the hard metal. That is, the composite material of the present invention comprises a cBN sintered body, a hard metal and a bonding layer existing therebetween, and the bonding layer comprises a metal having a thickness of 0.1 to 5 µm.

The hard metal of the present invention is not specifically limited so long as it is a hard metal to be used for a cutting tool, and there may be mentioned, for example, a hard metal comprising 50 to 97% by mass of a hard phase which comprises at least one selected from the group consisting of a carbide or a nitride of Ti, Zr, Hf, V, Nb, Ta, Cr, Mo and W and a solid solution thereof: and 3 to 50% by mass of a metal phase which comprises at least one selected from the group consisting of Co, Ni and Fe as a main component. The hard phase of the hard metal of the present invention may be mentioned WC, TiC, TiN, Ti(C,N), (Ti,Nb)(C,N), (Ti,W,Ta)(C,N), (Ti,W,Nb,Zr)(C,N), (Ti,W,Mo,Nb)(C,N), ZrC, ZrN, Zr(C,N), NbC, Mo₂C, (Ta,Nb)(C,N), (Ta,Nb,Hf)(C,N), (W,Nb)(C,N), (W,Mo)(C,N), (W,Mo,Nb)C and (W,Ta,Mo)(C,N), etc., but the present invention is not limited by these. Also, the metal phase of the hard metal of the present invention is a metal comprising at least one selected from the group consisting of Co, Ni and Fe as a main component. The metal phase of the hard metal of the present invention contains at least one selected from the group consisting of Co, Ni and Fe in an amount(s) of 70 to 100% by mass based on the total amount of the metal phase, but may contain, other than the Co, Ni and Fe as the main component(s), at least one selected from the group consisting of Ti, Zr, Hf, V, Nb, Ta, Cr, Mo, W, C and N in an amount(s) of 0 to 30% by mass based on the total amount of the metal phase.

The cBN sintered body of the present invention is not particularly limited so long as it is a cBN sintered body used as a cutting tool, and may be mentioned, for example, a sintered body containing 20 to 100% by mass of cBN (cubic boron nitride), and as the remainder other than the cBN, it may contain a binder phase comprising at least one selected from the group consisting of a metal of Ti, Zr, Hf, V, Nb, Ta, Cr, Mo, W, Co, Ni and Al, a carbide, a nitride, a boride and an oxide and a solid solution thereof in an amount of 0 to 80% by mass. The binder phase of the cBN sintered body of the present invention may be specifically mentioned TiN, Ti(C,N), TiC, TiB₂, TiBN, TiAIN, Ti₂AlN, AIN, AlB₂, Al₂O₃, ZrC, HfC, VC, NbC, TaC, Cr₃C₂, Mo₂C, ZrN, HfN, VN, NbN, TaN, CrN, WC, WB, W₂B, CoWB, W₂Co₂₁B₆, Co₃W₃C, W, Co and Ni, but the present invention is not limited by these.

The bonding layer of the present invention comprises a metal having a thickness of 0.1 to 5 µm. If the thickness of the bonding layer is less than 0.1 µm or less, stable bonding strength cannot be obtained, while if the thickness of the bonding layer becomes thick exceeding 5 µm, the bonding strength is lowered, so that it was made a metal with a thickness of 0.1 to 5 µm. Among these, a thickness of 1 to 3 µm is preferred. It is more preferred that the bonding layer of the present invention contains at least one selected from the group consisting of Co, Ni and Fe in an amount of 30 to 100% by mass based on the whole bonding layer, and the remainder is a metal comprising at least one selected from the group consisting of Ti, Zr, Hf, V, Nb, Ta, Cr, Mo, W, Al, C, B and N in an amount of 0 to 70% by mass based on the whole bonding layer, since strength of the bonding layer itself is increased so that bonding strength is improved. Among these, it is further preferred that the bonding layer contains at least one selected from the group consisting of Co, Ni and Fe in an amount of 70 to 100% by mass based on the whole bonding layer, and the remainder is a metal comprising at least one selected from the group consisting of Ti, Zr, Hf, V, Nb, Ta, Cr, Mo, W, Al, C, B and N in an amount of 0 to 30% by mass based on the whole bonding layer. The bonding layer of the present invention is preferably so formed that the thickness thereof is as uniform as possible to the bonded interface.

The preparation method of the composite material of the present invention can be mentioned, for example, the following methods. First, the cBN sintered body and the hard metal are each subjected to mirror polishing, degreasing and washing are sufficiently carried out by using an organic solvent such as acetone, etc., then, using an apparatus such as hot press, etc., the materials are maintained in vacuum at 1100°C to 1250°C for 30 to 150 minutes while loading a pressure of 0.5 kgf/cm² or higher to the material, and then cooled. According to this procedure, the metal phase in the hard metal is leached out at the bonded interface between the hard metal and the cBN sintered body to form a bonding layer. If the pressure becomes high exceeding 1000 kgf/cm², the hard metal causes plastic deformation, and change in shape becomes too large. Thus, it is practically preferred in the range of 0.5 to 1000 kgf/cm², and among these, it is further preferred in the range of 0.5 to 300 kgf/cm². It is also preferred that a component(s) of the cBN sintered body is/are dissolved into the bonding layer. A component(s) of the cBN sintered body is/are diffused into the hard metal through the bonding layer, and a component(s) of the hard metal is/are diffused into the cBN sintered body through the same, so that firm bonding is realized.

If the temperature at the time of bonding becomes high exceeding 1250°C, cBN is phase transformed into brittle hBN (hexagonal boron nitride) so that bonding strength is lowered. On the other hand, if the temperature at the time of bonding becomes lower than 1100°C, the bonding layer is difficultly formed, and it takes a longer time until the bonding layer has been formed so that it is economically disadvantageous. Also, if the holding time is shorter than 30 minutes, the bonding layer can be difficultly formed with less stability, while if the holding time becomes longer exceeding 150 minutes, the bonding layer becomes thick exceeding 5 µm with high possibility. Therefore, the bonding temperature at the time of bonding is preferably 1100°C to 1250°C and the holding time is preferably 30 to 150 minutes, and further preferably, the bonding temperature is 1150°C to 1250°C and the holding time is 60 to 120 minutes.

An apparatus for bonding is not particularly limited only to the above-mentioned hot press, but any apparatus can be used so long as it can raise the temperature in vacuum or in an inert gas. It is preferred to apply a load to fix the hard metal and the cBN sintered body, and it is also preferred to fix the hard metal and the cBN sintered body by a jig, etc., before raising the temperature and then raise the temperature to prepare the composite material of the present invention. Also, it is more preferred when the temperature is raised while applying a high load to the material using a hot press, etc., the hard metal causes extremely plastic deformation, so that adhesiveness with the cBN sintered body is increased, and as a result, bonding is possible at a low temperature within a short period of time.

When a coating is formed on the surface of the composite material of the present invention by the CVD method, the PVD method, etc., wear resistance can be further improved. The composite material of the present invention can be coated at a higher temperature than the conventional brazed cBN tool, so that the coated composite material of the present invention can be higher adhesiveness between the coating and the composite material than those of the conventional coated cBN sintered body. The coating of the present invention comprises at least one selected from the group consisting of a carbide, a nitride, an oxide and a boride of Ti, Zr, Hf, V, Nb, Ta, Cr, Mo, W, Al and Si, and a solid solution thereof. The coating of the present invention may be specifically mentioned TiC, TiN, TiCN, TiAIN, TiSiN, AICrN and Al₂O₃, etc. The coating may be constituted by either of a single layer or a laminated layer of 2 or more layers, or may be an alternately laminated film in which thin layers having a layer thickness of 5 to 200 nm and having different compositions are alternately laminated.
If the total film thickness of the whole coating is less than 0.3 µm in an average film thickness, the effect of improving wear resistance is small, while if it becomes thick exceeding 25 µm, fracture resistance tends to be lowered, so that the total film thickness of the whole coating is preferably 0.3 to 25 µm in an average film thickness. The coating can be formed by the conventionally known CVD method or PVD method.

The composite material of the present invention has high bonding strength between the cBN sintered body and the hard metal, so that it shows excellent cutting characteristics when it is used as a cutting tool. As a cutting tool, there may be specifically mentioned a turning tool, a milling tool, drill, end mill, etc. The composite material for a cutting tool of the present invention can be used under severe conditions that cause the problem of bonding strength of brazing, and the composite material for a cutting tool of the present invention shows excellent cutting characteristics. Also, the coated composite material of the present invention has high bonding strength between the cBN sintered body and the hard metal, and adhesiveness between the film and the composite material is high, so that the coated composite material for a cutting tool shows excellent cutting characteristics.

### EFFECTS OF THE INVENTION

The composite material of the present invention accomplishes the effect that the bonding strength of the cBN sintered body and the hard metal is high. The coated composite material of the present invention accomplishes the effects that the bonding strength of the cBN sintered body and the hard metal is high, and the adhesiveness of the coated film and the composite material is high.

### [Example 1]

Disc-shaped cBN sintered bodies each having a diameter of 30 mm and a thickness of 1.5 mm and having a composition shown in Table 1, and disc-shaped hard metals each having a diameter of 30 mm and a thickness of 3.0 mm and having a composition shown in Table 2 were prepared. With regard to all the samples, the surface to be bonded was subjected to mirror polishing using diamond abrasive, etc., and then, to ultrasonic cleaning in acetone for 10 minutes. Thereafter, by using a hot press apparatus, the surface of the cBN sintered body to be bonded and the surface of the hard metal to be bonded were superimposed, and while applying a load shown in Table 3 to each of the superimposed materials, the temperature was raised from the room temperature to the bonding temperature shown in Table 3 in vacuum. The bonding pressure, the bonding temperature and the holding time shown in Table 3 were maintained, and then, the material was cooled. After cooling, the load was lowered to obtain a composite material in which the cBN sintered body and hard metal had been bonded.

**[Table 1]**

| Sample No. | cBN sintered body | | | |
|---|---|---|---|---|
| | cBN phase | | Binder phase | |
| | Composition | Content based on whole cBN sintered body (% by mass) | Composition | Content based on whole cBN sintered body (% by mass) |
| Present product 1 | cBN | 60 | TiN, Al₂O₃, AIN | 40 |
| Present product 2 | cBN | 40 | TiN, TiB₂, Al₂O₃, AIN | 60 |
| Present product 3 | cBN | 60 | Ti(C,N), Al₂O₃, AlN | 40 |
| Present product 4 | cBN | 30 | Ti(C,N), Al₂O₃, AlN | 70 |
| Present product 5 | cBN | 85 | WC, W₂Co₂₁B₆, Al₂O₃ | 15 |
| Present product 6 | cBN | 95 | WC, W₂Co₂₁B₆, Al₂O₃ | 5 |
| Present product 7 | cBN | 60 | Ti(C,N), Al₂O₃, AIN | 40 |
| Present product 8 | cBN | 60 | Ti(C,N), Al₂O₃, AlN | 40 |
| Present product 9 | cBN | 60 | TiN, Al₂O₃, AlN | 40 |
| Present product 10 | cBN | 60 | TiN, Al₂O₃, AlN | 40 |
| Present product 11 | cBN | 60 | Ti(C,N), Al₂O₃, AlN | 40 |
| Present product 12 | cBN | 60 | TiN, Al₂O₃, AIN | 40 |
| Present product 13 | cBN | 60 | TiN, Al₂O₃, AlN | 40 |
| Present product 14 | cBN | 85 | WC, W₂Co₂₁B₆, Al₂O₃ | 15 |
| Comparative product 1 | cBN | 60 | TiN, Al₂O₃, AIN | 40 |
| Comparative product 2 | cBN | 85 | WC, W₂Co₂₁B₆, Al₂O₃ | 15 |
| Comparative product 3 | cBN | 60 | Ti(C,N), Al₂O₃, AIN | 40 |
| Comparative product 4 | cBN | 40 | TiN, TiB₂, Al₂O₃, AlN | 60 |
| Comparative product 5 | cBN | 60 | Ti(C,N), Al₂O₃, AIN | 40 |
| Comparative product 6 | cBN | 60 | TiN, Al₂O₃, AlN | 40 |
| Comparative product 7 | cBN | 60 | TiN, Al₂O₃, AlN | 40 |
| Comparative product 8 | cBN | 60 | TiN, Al₂O₃, AIN | 40 |

**[Table 2]**

| Sample No. | Hard metal | | | |
|---|---|---|---|---|
| | Hard phase | | Metal phase | |
| | Composition | Content based on whole hard metal (% by mass) | Composition (% by mass) | Content based on whole hard metal (% by mass) |
| Present product 1 | WC | 89 | 90Co-4W-5Cr-1C | 11 |
| Present product 2 | Ti(C,N), (Ti,W,Ta)(C,N) | 86 | 43Co-42Ni-7Ti-3W-2Ta-2C-1N | 14 |
| Present product 3 | WC, (Ti,Nb)(C,N) | 89 | 90Co-4W-1Ti-4Cr-1C | 11 |
| Present product 4 | WC | 84 | 94Co-5W-2V-1C | 16 |
| Present product 5 | WC | 89 | 90Co-4W-5Cr-1C | 11 |
| Present product 6 | Ti(C,N), (Ti,W,-Nb,Zr)(C,N) | 79 | 48Co-42Ni-5Ti-4W-1C | 21 |
| Present product 7 | WC | 90 | 47Co-47Fe-5W-1C | 10 |
| Present product 8 | WC | 95 | 92Co-7W-1C | 5 |
| Present product 9 | WC | 89 | 90Co-4W-5Cr-1C | 11 |
| Present product 10 | WC | 94 | 92Co-7W-1C | 6 |
| Present product 11 | WC | 95 | 90Co-4W-5Cr-1C | 5 |
| Present product 12 | WC | 95 | 90Co-4W-5Cr-1C | 5 |
| Present product 13 | WC, (Ti,Nb)(C,N) | 90 | 90Co-4W-1Ti-4Cr-1C | 10 |
| Present product 14 | WC | 90 | 90Co-4W-5Cr-1C | 10 |
| Comparative product 1 | WC | 90 | 90Co-4W-5Cr-1C | 10 |
| Comparative product 2 | WC | 84 | 95Co-4W-1C | 16 |
| Comparative product 3 | Ti(C,N), (Ti,W,-Mo,Nb)(C,N) | 79 | 43Co-42Ni-7Ti-3W-1Mo-2Nb-1C-1N | 21 |
| Comparative product 4 | WC, (Ti,Nb)(C,N) | 90 | 92Co-6W-1Ti-1C | 10 |
| Comparative product 5 | WC | 90 | 92Co-7W-1C | 10 |
| Comparative product 6 | WC | 90 | 90Co-4W-5Cr-1C | 10 |
| Comparative product 7 | WC | 90 | 92Co-7W-1C | 10 |
| Comparative product 8 | WC | 89 | 90Co-4W-5Cr-1C | 11 |

**[Table 3]**

| Sample No. | Bonding conditions | | |
|---|---|---|---|
| | Bonding temperature (°C) | Holding time (min) | Bonding pressure (kgf/cm²) |
| Present product 1 | 1250 | 60 | 1 |
| Present product 2 | 1200 | 100 | 1 |
| Present product 3 | 1250 | 60 | 1 |
| Present product 4 | 1200 | 60 | 1 |
| Present product 5 | 1250 | 60 | 1 |
| Present product 6 | 1250 | 80 | 1 |
| Present product 7 | 1150 | 90 | 1 |
| Present product 8 | 1150 | 90 | 1 |
| Present product 9 | 1250 | 90 | 1 |
| Present product 10 | 1100 | 150 | 400 |
| Present product 11 | 1250 | 30 | 300 |
| Present product 12 | 1150 | 30 | 700 |
| Present product 13 | 1150 | 60 | 150 |
| Present product 14 | 1200 | 60 | 900 |
| Comparative product 1 | 1000 | 60 | 1 |
| Comparative product 2 | 1350 | 100 | 1 |
| Comparative product 3 | 1050 | 150 | 1 |
| Comparative product 4 | 1350 | 70 | 1 |
| Comparative product 5 | 1300 | 80 | 1 |
| Comparative product 6 | 1250 | 200 | 1 |
| Comparative product 7 | 1200 | 60 | 1200 |
| Comparative product 8 | 1300 | 120 | 1 |

From the resulting composite materials, test pieces for analyzing the composition with a size of 10×10×4.5 mm and test pieces for shear strength with a size of 15×15×4.5 mm were cut by wirecut. The thickness of the bonding layer was measured by using an SEM, and the composition of the bonding layer was analyzed by an EDS. For the shear strength test, a universal tester was used, and shear strength was measured by fixing the hard metal side, and applying a load to the neighbor of the interface of the cBN sintered body side from the upper side. The thickness and the composition of the bonding layer and shear strength of each sample were shown in Table 4.

**[Table 4]**

| Sample No. | Bonding layer | | Shear strength (MPa) |
|---|---|---|---|
| | Thickness (µm) | Composition (% by mass) | |
| Present product 1 | 2.3 | 90Co-4W-5Cr-1C | 216 |
| Present product 2 | 4.8 | 17Co-16Ni-37Ti-25W-2Ta-1Al-1C-1N | 170 |
| Present product 3 | 2.2 | 90Co-4W-1Ti-4Cr-1C | 221 |
| Present product 4 | 3.0 | 94Co-SW-1C | 231 |
| Present product 5 | 2.0 | 90Co-5W-2Al-1Cr-1C-1B | 222 |
| Present product 6 | 3.2 | 47Co-42Ni-5Ti-4W-1C-1N | 227 |
| Present product 7 | 4.2 | 47Co-42Fe-6W-3Ti-1C-1B | 203 |
| Present product 8 | 0.8 | 74Co-12W-11C-3Ti | 220 |
| Present product 9 | 4.6 | 34Co-60W-5Cr-1C | 181 |
| Present product 10 | 2.1 | 94Co-5W-1C | 220 |
| Present product 11 | 0.5 | 90Co-4W-5Cr-1C | 218 |
| Present product 12 | 0.1 | 90Co-4W-5Cr-1C | 180 |
| Present product 13 | 1.0 | 90Co-4W-1Ti-4Cr-1C | 229 |
| Present product 14 | 1.5 | 90Co-4W-5Cr-1C | 220 |
| Comparative product 1 | 0 | - | 0.1 |
| Comparative product 2 | 10.2 | 65Co-25W-3Al-5C-2B | 97 |
| Comparative product 3 | 0.05 | Analysis impossible | 0.4 |
| Comparative product 4 | 8.5 | 28Co-57W-9Ti-3Al-2C-1B | 32 |
| Comparative product 5 | 6.2 | 94Co-5W-1C | 150 |
| Comparative product 6 | 9.0 | 90Co-4W-5Cr-1C | 130 |
| Comparative product 7 | 0 | - | 0 |
| Comparative product 8 | 8.4 | 90Co-4W-5Cr-1C | 102 |

From Table 4, it can be understood that Present products have high shear strength. In Comparative product 1, the bonding temperature was low so that the bonding layer was not sufficiently formed whereby bonding was hardly carried out. In Comparative product 2, the holding time is long so that the bonding layer became thick whereby shear strength was lowered. Also, its bonding was carried out at a high temperature of 1350°C, so that cBN in the cBN sintered body was phase-transformed into hBN whereby shear strength was lowered. In Comparative product 3, the bonding layer was extremely thin so that the composition of the bonding layer could not be analyzed. In Comparative product 3, the bonding temperature was low as in Comparative product 1, so that the bonding layer was not sufficiently formed whereby bonding was hardly carried out. In Comparative product 4, the bonding layer became too thick as in Comparative product 2, whereby shear strength was lowered. Also, in Comparative product 4, a Co amount in the bonding layer was a little, whereby strength of the bonding layer itself was lowered and shear strength was lowered. In Comparative products 5 and 8, the bonding temperature was high as in Comparative product 2, so that cBN was phase-transformed into hBN whereby shear strength was lowered. In Comparative product 6, the bonding time was long so that the bonding layer was thick whereby shear strength was lowered. In Comparative product 7, the bonding pressure was high, so that the hard metal was plastically deformed during bonding so that bonding could not be carried out.

### [Example 2]

A disc-shaped cBN sintered body having a diameter of 30 mm and a thickness of 1.5 mm and having a composition comprising 60% by mass cBN-40% by mass binder phase (Composition of the binder phase: TiN, Al₂O₃, AIN), and a disc-shaped hard metal having a diameter of 30 mm and a thickness of 3.0 mm and having a composition comprising 89% by mass WC - 11% by mass a metal phase (Composition of the metal phase: 95% by mass Co - 4% by mass W - 1% by mass C) were prepared. With regard to the cBN sintered body and the cemented carbide, the surfaces to be bonded was subjected to mirror polishing using diamond abrasive, etc., and then, to ultrasonic cleaning in acetone for 10 minutes. Thereafter, by using a hot press apparatus, the surface of the cBN sintered body to be bonded and the surface of the hard metal to be bonded were superimposed, and while applying a load of 1 kgf/cm² thereto so that the position of the sample was not tilted, the temperature was raised from the room temperature to 1250°C in vacuum, maintained at the bonding temperature of 1250°C for 60 minutes and then cooled. After cooling, the load was lowered to obtain a composite material in which the cBN sintered body and hard metal had been bonded. The resulting composite material was cut by wirecut, and grinded and worked to an ISO Standard CNGA120408 shaped cutting insert to prepare Tool 1 (Present product 1 corresponding product). Also, Tool 2 was prepared by coating a Ti(C,N) film having an average film thickness of 3 µm on the surface of Tool 1 by the PVD method. As Comparative product, a shape with a size of 3×3×1.5 mm was cut from a disc-shaped cBN sintered body having a diameter of 30 mm and a thickness of 1.5 mm and having a composition comprising 60% by mass cBN-40% by mass binder phase (Composition of the binder phase: TiN, Al₂O₃, AIN), and brazed to a substrate made of a hard metal in the same manner as in the conventional cBN tool, and worked to an ISO Standard CNGA120408 shaped cutting insert to obtain Tool 3.

By using Tools 1, 2 and 3, interrupted cutting of a hardened steel was carried out. Cutting conditions are made a cutting speed Vc=100 m/min, depth of cut ap=0.5 mm and feed rate f=0.25 mm/rev, a round bar with two U-shaped slots was cut by external turning. As a result, Tool 3 was markedly fractured from the brazed portion at a cutting time of 8 minutes. On the other hand, in Tool 1, it was possible to carry out the processing until the cutting time of 15 minutes, but at the cutting time of 15 minutes, flaking occurred to the cBN sintered body. However, in Tool 1, no peeling occurred at the bonded surface of the cBN sintered body and the hard metal. In Tool 2, flaking occurred to the cBN sintered body at the cutting time of 24 minutes, but as in Tool 1, no peeling occurred at the bonded surface. As stated above, in Tool 1, bonding strength was high and it showed high performances as a cutting tool whereby the tool life could be elongated. In Tool 2 in which a coating is provided on the surface of Tool 1, the tool life could be further elongated. On the other hand, in Tool 3, it was fractured at the brazing portion at the initial stage of the cutting.

## Claims

1. A composite material which comprises a cBN sintered body, hard metal, and a bonding layer presenting between the cBN sintered body and the hard metal, and the bonding layer comprises a metal with a thickness of 0.1 to 5 µm.

2. The composite material according to Claim 1, wherein the bonding layer is a metal containing at least one selected from the group consisting of Co, Ni and Fe in an amount of 30 to 100% by mass.

3. The composite material according to Claim 2, wherein the bonding layer contains at least one selected from the group consisting of Co, Ni and Fe in an amount of 30 to 100% by mass based on a whole bonding layer, and a remainder, other than Co, Ni and Fe, is a metal containing at least one selected from the group consisting of Ti, Zr, Hf, V, Nb, Ta, Cr, Mo, W, Al, C, B and N in an amount of 0 to 70% by mass based on the whole bonding layer.

4. The composite material according to Claim 1, wherein the bonding layer is a metal containing at least one selected from the group consisting of Co, Ni and Fe in an amount of 70 to 100% by mass.

5. The composite material according to Claim 4, wherein the bonding layer contains at least one selected from the group consisting of Co, Ni and Fe in an amount of 70 to 100% by mass based on a whole bonding layer, and a remainder, other than Co, Ni and Fe, is a metal containing at least one selected from the group consisting of Ti, Zr, Hf, V, Nb, Ta, Cr, Mo, W, Al, C, B and N in an amount of 0 to 30% by mass based on the whole bonding layer.

6. The composite material according to Claim 1, wherein the cBN sintered body is a cBN sintered body containing 20 to 100% by mass of cBN.

7. The composite material according to Claim 6, wherein the cBN sintered body comprises 20 to 100% by mass of cBN, and as the remainder other than the cBN, and O to 80% by mass of a binder phase comprising at least one selected from the group consisting of a metal, a carbide, a nitride, a boride and an oxide of Ti, Zr, Hf, V, Nb, Ta, Cr, Mo, W, Co, Ni and Al, and a solid solution thereof.

8. The composite material according to Claim 7, wherein the binder phase of the cBN sintered body is a binder phase comprising at least one selected from the group consisting of TiN, Ti(C,N), TiC, TiB₂, TiBN, TiAIN, Ti₂AlN, AIN, AlB₂, Al₂O₃, ZrC, HfC, VC, NbC, TaC, Cr₃C₂, Mo₂C, ZrN, HfN, VN, NbN, TaN, CrN, WC, WB, W₂B, CoWB, W₂Co₂₁B₆, Co₃W₃C, W, Co and Ni.

9. The composite material according to Claim 1, wherein the hard metal comprises 50 to 97% by mass of a hard phase comprising at least one selected from the group consisting of a carbide and a nitride of Ti, Zr, Hf, V, Nb, Ta, Cr, Mo and W, and a solid solution thereof, and as the remainder, 3 to 50% by mass of a metal phase comprising at least one selected from the group consisting of Co, Ni and Fe as a main component.

10. The composite material according to Claim 9, wherein the hard phase of the hard metal is a hard phase comprising at least one selected from the group consisting of WC, TiC, TiN, Ti(C,N), (Ti,Nb)(C,N), (Ti,W,Ta)(C,N), (Ti,W,Nb,Zr)(C,N), (Ti,W,Mo,Nb)(C,N), ZrC, ZrN, Zr(C,N), NbC, Mo₂C, (Ta,Nb)(C,N), (Ta,Nb,Hf)(C,N), (W,Nb)(C,N), (W,Mo)(C,N), (W,Mo,Nb)C and (W,Ta,Mo)(C,N).

11. The composite material according to Claim 9, wherein the metal phase of the hard metal is a metal phase containing at least one selected from the group consisting of Co, Ni and Fe in an amount of 70 to 100% by mass based on a whole metal phase, and, other than Co, Ni and Fe, at least one selected from the group consisting of Ti, Zr, Hf, V, Nb, Ta, Cr, Mo, W, C and N in an amount of 0 to 30% by mass based on the whole metal phase.

12. The composite material according to Claim 9, wherein the hard phase of the hard metal is a hard phase comprising at least one selected from the group consisting of WC, TiC, TiN, Ti(C,N), (Ti,Nb)(C,N), (Ti,W,Ta)(C,N), (Ti,W,Nb,Zr)(C,N), (Ti,W,Mo,Nb)(C,N), ZrC, ZrN, Zr(C,N), NbC, Mo₂C, (Ta,Nb)(C,N), (Ta,Nb,Hf)(C,N), (W,Nb)(C,N), (W,Mo)(C,N), (W,Mo,Nb)C and (W,Ta,Mo)(C,N), and the metal phase of the hard metal is a metal phase comprising at least one selected from the group consisting of Co, Ni and Fe in an amount of 70 to 100% by mass based on a whole metal phase, and, other than Co, Ni and Fe, at least one selected from the group consisting of Ti, Zr, Hf, V, Nb, Ta, Cr, Mo, W, C and N in an amount of 0 to 30% by mass based on the whole metal phase.

13. A coated composite material comprising the composite material according to any one of Claims 1 to 12, wherein a film is coated on the surface of the composite material.

14. The coated composite material according to Claim 13, wherein the film comprises at least one selected from the group consisting of a carbide, a nitride, an oxide and a boride of Ti, Zr, Hf, V, Nb, Ta, Cr, Mo, W, Al and Si, and a solid solution thereof, and a total film thickness of the coating film being 0.3 to 25 µm in an average film thickness.

15. The composite material for a cutting tool, which uses the composite material according to any one of Claims 1 to 12 as a cutting tool.

16. A coated composite material for a cutting tool, which uses the coated composite material according to Claim 13 or 14 as a cutting tool.

## Amended claims

### Amended claims under Art. 19.1 PCT

**1.** A composite material which comprises a cBN sintered body, hard metal, and a bonding layer presenting between the cBN sintered body and the hard metal, and the bonding layer comprises a metal with a thickness of 0.1 to 5 µm.

**2.** The composite material according to Claim 1, wherein the bonding layer is a metal containing at least one selected from the group consisting of Co, Ni and Fe in an amount of 30 to 100% by mass.

**3.** The composite material according to Claim 2, wherein the bonding layer contains at least one selected from the group consisting of Co, Ni and Fe in an amount of 30 to 100% by mass based on a whole bonding layer, and a reminder, other than Co, Ni and Fe, is a metal containing at least one selected from the group consisting of Ti, Zr, Hf, V, Nb, Ta, Cr, Mo, W, Al, C, B and N in an amount of 0 to 70% by mass based on the whole bonding layer.

**4.** The composite material according to Claim 1, wherein the bonding layer is a metal containing at least one selected from the group consisting of Co, Ni and Fe in an amount of 70 to 100% by mass.

**5.** The composite material according to Claim 4, wherein the bonding layer contains at least one selected from the group consisting of Co, Ni and Fe in an amount of 70 to 100% by mass based on a whole bonding layer, and a reminder, other than Co, Ni and Fe, is a metal containing at least one selected from the group consisting of Ti, Zr, Hf, V, Nb, Ta, Cr, Mo, W, Al, C, B and N in an amount of 0 to 30% by mass based on the whole bonding layer.

**6.** (Amended) The composite material according to any one of Claims 1 to 5, wherein the cBN sintered body is a cBN sintered body containing 20 to 100% by mass of cBN.

**7.** The composite material according to Claim 6, wherein the cBN sintered body comprises 20 to 100% by mass of cBN, and as the reminder other than the cBN, and 0 to 80% by mass of a binder phase comprising at least one selected from the group consisting of a metal, a carbide, a nitride, a boride and an oxide of Ti, Zr, Hf, V, Nb, Ta, Cr, Mo, W, Co, Ni and Al, and a solid solution thereof.

**8.** The composite material according to Claim 7, wherein the binder phase of the cBN sintered body is a binder phase comprising at least one selected from the group consisting of TiN, Ti(C,N), TiC, TiB₂, TiBN, TiAlN, Ti₂AlN, AIN, AlB₂, Al₂O₃, ZrC, HfC, VC, NbC, TaC, Cr₃C₂, Mo₂C, ZrN, HfN, VN, NbN, TaN, CrN, WC, WB, W₂B, CoWB, W₂Co₂₁B₆, Co₃W₃C, W, Co and Ni.

**9.** (Amended) The composite material according to any one of Claims 1 to 8, wherein the hard metal comprises 50 to 97% by mass of a hard phase comprising at least one selected from the group consisting of a carbide and a nitride of Ti, Zr, Hf, V, Nb, Ta, Cr, Mo and W, and a solid solution thereof, and as the reminder, 3 to 50% by mass of a metal phase comprising at least one selected from the group consisting of Co, Ni and Fe as a main component.

**10.** The composite material according to Claim 9, wherein the hard phase of the hard metal is a hard phase comprising at least one selected from the group consisting of WC, TiC, TiN, Ti(C,N), (Ti,Nb)(C,N), (Ti,W,Ta)(C,N), (Ti,W,Nb,Zr)(C,N), (Ti,W,Mo,Nb)(C,N), ZrC, ZrN, Zr(C,N), NbC, Mo₂C, (Ta,Nb)(C,N), (Ta,Nb,Hf)(C,N), (W,Nb)(C,N), (W,Mo)(C,N), (W,Mo,Nb)C and (W,Ta,Mo)(C,N).

**11.** The composite material according to Claim 9, wherein the metal phase of the hard metal is a metal phase containing at least one selected from the group consisting of Co, Ni and Fe in an amount of 70 to 100% by mass based on a whole metal phase, and, other than Co, Ni and Fe, at least one selected from the group consisting of Ti, Zr, Hf, V, Nb, Ta, Cr, Mo, W, C and N in an amount of 0 to 30% by mass based on the whole metal phase other than Co, Ni and Fe.

**12.** The composite material according to Claim 9, wherein the hard phase of the hard metal is a hard phase comprising at least one selected from the group consisting of WC, TiC, TiN, Ti(C,N), (Ti,Nb)(C,N), (Ti,W,Ta)(C,N), (Ti,W,Nb,Zr)(C,N), (Ti,W,Mo,Nb)(C,N), ZrC, ZrN, Zr(C,N), NbC, Mo₂C, (Ta,Nb)(C,N), (Ta,Nb,Hf)(C,N), (W,Nb)(C,N), (W,Mo)(C,N), (W,Mo,Nb)C and (W,Ta,Mo)(C,N), and the metal phase of the hard metal is a metal phase comprising at least one selected from the group consisting of Co, Ni and Fe in an amount of 70 to 100% by mass based on a whole metal phase, and, other than Co, Ni and Fe, at least one selected from the group consisting of Ti, Zr, Hf, V, Nb, Ta, Cr, Mo, W, C and N in an amount of 0 to 30% by mass based on the whole metal phase other than Co, Ni and Fe.

**13.** A coated composite material comprising the composite material according to any one of Claims 1 to 12, wherein a film is coated on the surface of the composite material.

**14.** The coated composite material according to Claim 13, wherein the film comprises at least one selected from the group consisting of a carbide, a nitride, an oxide and a boride of Ti, Zr, Hf, V, Nb, Ta, Cr, Mo, W, Al and Si, and a solid solution thereof, and a total film thickness of the coating film being 0.3 to 25 µm in an average film thickness.

**15.** The composite material for a cutting tool, which uses the composite material according to any one of Claims 1 to 12 as a cutting tool.

**16.** A coated composite material for a cutting tool, which uses the coated composite material according to Claim 13 or 14 as a cutting tool.
